# EUROPEAN PATENT APPLICATION

(11) **EP 3 985 566 A1**
(43) Date of publication of application: **20.04.2022**
(21) Application number: 20201677.0
(22) Date of filing: 14.10.2020
(51) Int. Cl.: G06N 3/04, G06F 17/18

(54) **METHOD AND SYSTEM FOR PREDICTING TIME SERIES OF DATA BASED ON A NEURAL NETWORK**

(71) Applicant: Continental Automotive GmbH, 30165 Hannover (DE)
(72) Inventor: Chattha, Muhammad Ali, 90411 Nürnberg (DE); Ahmed, Sheraz, 90411 Nürnberg (DE); van Elst, Ludger, 90411 Nürnberg (DE)
(74) Representative: Continental Corporation

(57) **Abstract**

The invention relates to a computer-implemented method for predicting time series of data based on a main neural network (13) by fusing data-driven and knowledge-driven features.

## Description

The present invention relates generally to the field of neural networks, specifically deep neural networks. More specifically, the invention relates to a method and a system for predicting time series of data based on first input information which are time series data (e.g. time-dependent sensor information) and second input information which are rule- or knowledge-based information (e.g. set of rules, knowledge graphs etc.).

Deep Learning Research has shown that neural networks, specifically deep neural networks require a significant number of training samples to be trained in order to achieve acceptable prediction results. Thus, in industrial applications, training data is a valuable asset and often not available to that extent that is needed to obtain promising results. As a result, predictors need to be developed in a way to work with fewer training examples or allow to incorporate predictions that have already been made by another predictor (e.g. expert system predictor).

Neural networks require a numerical representation of data. However, other knowledge representations do exist (e.g. rule-based systems, knowledge-graphs etc.) that allow to predict situations or values based on symbolic data representation. Current neural-network forecasting approaches often lack possibilities to incorporate knowledge-driven or rule-base predictors.

It is an objective of the embodiments of the invention to provide a method for prediction time series of data based on a neural network which uses data-driven and rule- or knowledge-driven information as inputs and provides predictions of time series information by using both, data-driven and knowledge-driven information in order to lower training data requirements and/or to provide improved predictions in cases where ample data is available, as it combines information from both knowledge and data domains. The objective is solved by the features of the independent claims. Preferred embodiments are given in the dependent claims. If not explicitly indicated otherwise, embodiments of the invention can be freely combined with each other.

According to an aspect, the invention refers to a method for predicting time series of data based on a main neural network. The method comprises the following steps:
At first, first input information is received. Said first input information is time-dependent numerical information, for example output information of a sensor or a computer system. More specifically, first input information may be provided by an image sensor or a camera. Said first input information may comprise information regarding the environment in the surrounding of the vehicle in which the sensor is included.

Furthermore, second input information is received, said second input information being rule- or knowledge-based information. Said second input information may be, for example, predictions made by an expert system. Said second input information is associated with first input information. For example, second input information may provide rules or additional knowledge which relates to the context of first input information but are provided by another information source (e.g. database, knowledge graph, another neural network etc.).

Said second input information is processed based on an auto-encoder. The auto-encoder is configured to encode second input information by extracting features from said second input information, thereby obtaining encoded second input information. Said encoded second input information may be condensed information of second input information, i.e. still comprises relevant information but redundant information has been removed.

Said encoded second input information is provided to a fusion network. Said fusion network provides transformed information which is obtained by transforming encoded second input information according to properties of the main neural network. By using auto-encoder and fusion network, second input information may be transformed such that the output of fusion network, i.e. transformed information lies in the same vector space than features included in a hidden space of main neural network. Thereby fusion of rule- or knowledge-based information with time series data is possible.

Finally first input information and transformed information are provided to the main neural network, said main neural network fusing first input information and transformed information in order to provide time series predictions based on first input information and transformed information.

Said method is advantageous because combination of different information from different information sources is possible thereby reducing the effort for providing sufficient training data. In addition, using said auto-encoder and said fusion network, projection of second input information, specifically expert predictions, into the domain of main neural network is possible without restrictions on the model architecture of said information source providing second input information.

According to an embodiment, said auto-encoder comprises an encoder portion which maps second input information to a latent feature space comprising lower dimensionality than second input information. Thereby, the auto-encoder provides a condensed version of second input information which may be represented by a lower number of bits. However, the auto-encoder is trained such that relevant information is still included in encoded second input information, but redundant information is removed.

According to an embodiment, said fusion network adapts the dimensionality of feature vector provided by the auto-encoder to the dimensionality of a certain hidden layer of main neural network. In other words, encoded second input information is tailored by fusion network such that transformed information obtained by said tailoring or transformation step can be directly included in a hidden layer of main neural network, i.e. matches to the vector space of a certain hidden layer. Thereby, it is possible to train the weighting factors of main neural network based on both information, first input information being time-dependent numerical information and rule- or knowledge-based expert information / expert predictions.

According to an embodiment, the step of adapting dimensionality comprises transforming at least one dimension of feature vectors provided by the auto-encoder to at least one dimension of the vector space of said certain hidden layer such that at least one dimension of transformed information is equal to at least one dimension of vector space of said certain hidden layer. Thereby it is possible to add transformed information, for example as a further row or column to the hidden layer of the neural network.

According to an embodiment, said fusion network projects encoded second input information provided by auto-encoder into latent subspace, specifically, vector space of a certain hidden layer of main neural network. Thereby encoded second input information is transformed according to the architecture of main neural network which may be predetermined by the nature of first input information to be processed by main neural network.

According to an embodiment, transformed information is concatenated with the features included in a certain hidden layer of main neural network. Said features already included in a certain hidden layer are influenced solely by first input information. In contrary thereto, transformed information is influenced by second input information. After said concatenation, a set of features is provided to the next hidden layer which is influenced by both, first and second input information and the main neural network can be trained based on both information.

According to an embodiment, the step of concatenating transformed information with features of a certain hidden layer comprises increasing the dimensionality of vector space of a hidden layer. For example said concatenating step may comprise adding one or more rows or columns to the vector space of hidden layer. Thereby a fusion of data-based and rule- or knowledge-based information in a single neural network can be obtained.

According to an embodiment, the dimensionality is increased such that the vector space of the hidden layer in which transformed information are projected is the sum of dimensionality of features resulting from first input information and resulting from transformed information.

According to a further aspect, the invention relates to a system for predicting time series of data, the system comprising an auto-encoder, a fusion network and a main neural network. The system is configured to perform the steps of:
- Receiving first input information, said first input information being time-dependent numerical information;
- Receiving second input information, said second input information being rule- or knowledge-based information including one or more prediction information;
- Processing second input information based on the auto-encoder, the auto-encoder being configured to encode second input information by extracting features from said second input information, thereby obtaining encoded second input information;
- Providing said encoded second input information to the fusion network, said fusion network providing transformed information which is obtained by transforming encoded second input information according to properties of the main neural network; and
- Providing first input information and transformed information to the main neural network, said main neural network being configured to fuse first input information and transformed information in order to provide time series predictions based on first input information and transformed information.

Said system is advantageous because a combination of different information from different information sources is possible thereby reducing the effort for providing sufficient training data. In addition, using said auto-encoder and said fusion network, projection of second input information into the domain of main neural network is possible without restrictions on the model architecture of said information source providing second input information.

According to an embodiment of the system, the fusion network is configured to adapt the dimensionality of feature vector provided by the auto-encoder to the dimensionality of a certain hidden layer of main neural network. In other words, encoded second input information is tailored by fusion network such that transformed information obtained by said tailoring or transformation step can be directly included in a hidden layer of main neural network, i.e. matches to the vector space of a certain hidden layer. Thereby, it is possible to train the weighting factors of main neural network based on both information, namely first input information being time-dependent numerical information and rule- or knowledge-based expert information.

According to an embodiment of the system, the fusion network is configured to adapt the dimensionality of feature vector such that at least one dimension of feature vector provided by the auto-encoder is transformed to at least one dimension of the vector space of said certain hidden layer such that at least one dimension of transformed information is equal to at least one dimension of vector space of said certain hidden layer. Thereby it is possible to add transformed information, for example as a further row or column to the hidden layer of the neural network.

According to an embodiment of the system, fusion network is configured to project encoded second input information provided by auto-encoder into latent subspace, specifically, vector space of a certain hidden layer of main neural network. Thereby encoded second input information is transformed according to the architecture of main neural network which may be predetermined by the nature of first input information to be processed by main neural network.

According to an embodiment of the system, transformed information is concatenated with the features of a certain hidden layer of main neural network. Said features already included in a certain hidden layer are influenced solely by first input information. In contrary thereto, transformed information is influenced by second input information. After said concatenation, a set of features is provided to the next hidden layer which is influenced by both, first and second input information and the main neural network can be trained based on both information.

According to an embodiment of the system, the step of concatenating transformed information with features of a certain hidden layer comprises increasing the dimensionality of vector space of a hidden layer. For example said concatenating step may comprise adding one or more rows or columns to the vector space of hidden layer. Thereby a fusion of data-based and rule- or knowledge-based information in a single neural network can be obtained.

According to an embodiment of the system, the dimensionality is increased such that the vector space of the hidden layer in which transformed information are projected is the sum of dimensionality of features resulting from first input information and resulting from transformed information.

Any upper-mentioned feature described as an embodiment of the method is also applicable as a system feature in the system according to the present disclosure.

The term "vehicle" as used in the present disclosure may refer to a car, truck, bus, train or any other crafts.

The term "time-dependent numerical information" may refer to any information which may be presented by numerical values, e.g. digital numbers, integers, floats etc.

The term "knowledge-based information" may refer to any information provided by a knowledge-based system. Said information may comprise facts or guidelines regarding a certain topic which can be used for providing predictions or may be predictions from a knowledge-based system. More specifically, knowledge-based information may be expert predictions, wherein an "expert" can be any other system based on logic rules, statistical rules, expert humans etc.

The term "rule-based information" may refer to any information provided by a rule-based system which includes rules or principles regarding a certain topic based on which predictions can be made or may be rule-based predictions.

The term "hidden layer" may refer to an intermediate layer of a neural network which may be located between an input and an output of the neural network.

The term "essentially" or "approximately" as used in the invention means deviations from the exact value by +/- 10%, preferably by +/- 5% and/or deviations in the form of changes that are insignificant for the function and/or for the traffic laws.

Various aspects of the invention, including its particular features and advantages, will be readily understood from the following detailed description and the accompanying drawings, in which:
Fig. 1 shows a first embodiment of a system for predicting time series data based on first and second input information;
Fig. 2 shows a second embodiment of a system for predicting time series data based on first, second and third input information; and

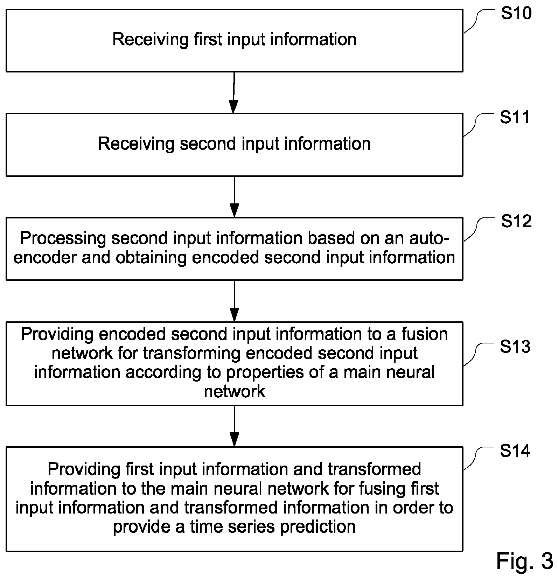

Fig. 3 shows a flowchart illustrating the method steps for predicting time series data based on first and second input information.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

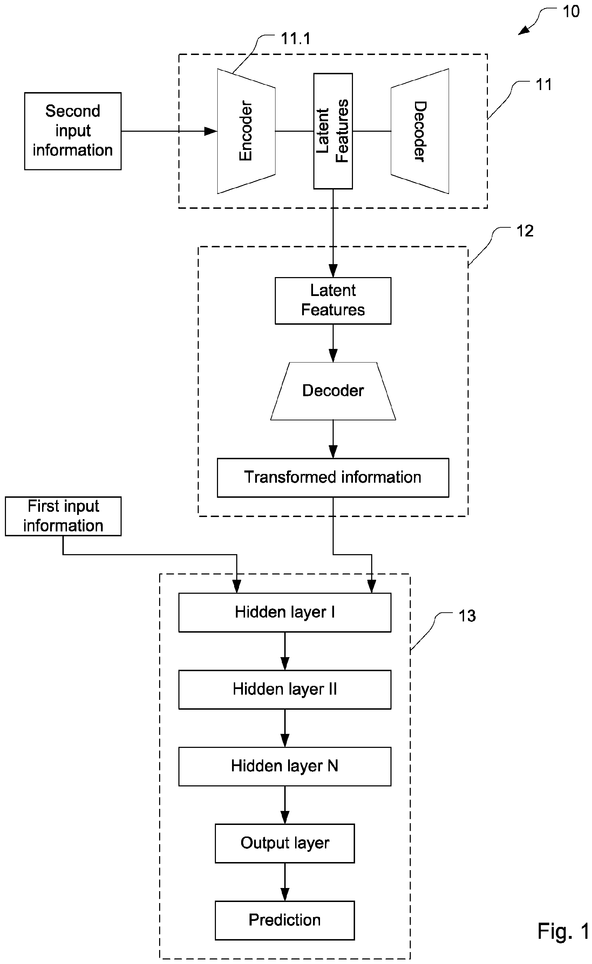

Fig. 1 illustrates an example system 10 for providing predictions based on first input information which are time series information and second input information which may be, for example, expert predictions from a data-driven information source.

As described further below, first input information may be time-dependent information which may be provided by a sensor included in a vehicle in order to provided autonomous driving capabilities based on said sensor information. In the present disclosure, such time-dependent information is also referred to as data-driven information.

Second input information may be information of a different information source. In contrary to first input information, said second input information are knowledge-based information.

The system 10 is configured to combine information of different information type, namely data-driven information and knowledge-based information and provide information based on both information types. More in detail, said information of different information types are merged in a single neural network, specifically a single deep neural network such that the values of a feature vector of a certain hidden layer are chosen based on first and second input information.

The system 10 comprises an auto-encoder 11, a fusion network 12 and a main neural network 13 for providing predictions based on first and second input information.

The auto-encoder 11 receives second input information which may be predictions from an expert system. The auto-encoder 11 may be an artificial neural network which is configured to learn efficient data codings of second input information in an unsupervised manner.

The auto-encoder 11 comprises an encoder portion 11.1 which receives said second input information and provides encoded second input information. The auto-encoder 11 is configured to learn efficient encodings of the data. More specifically, the auto-encoder 11 may reduce dimensionality of information by learning to ignore redundant information in the data, i.e. auto-encoder 11 is configured to provide encoded second input information which are still representative of second input information. In Fig. 1, encoded second input information are identified as latent features. In the following, said wording is used synonymously. So, in other words, latent features are an efficient encoding of second input information. Encoded second input information may be a vector comprising a certain number of digital bits.

Said encoded second input information (i.e. the latent features) which is the output of the auto-encoder 11 is provided to the fusion network 12 as an input. The fusion network 12 is configured to project encoded second input information into latent sub-space of main neural network 13. In other words, the fusion network transforms encoded second input information such that the size and/or structure of transformed information provided as an output of fusion network 12 fits to the sub-space of the hidden layer of main neural network 13.

For performing the transformation process, the fusion network 12 comprises at least one decoder 12.1. The decoder is configured to receive encoded second input information and to transform said encoded second input information into transformed information. Said transformed information may have the same dimension or at least one common dimension than the vector space of the hidden layer of main neural network 13 to which the transformed information is added.

For example, a certain hidden layer of main neural network 13 may have the vector space of 8x16. In order to be able to add encoded second input information provided by the auto-encoder 11 to the main neural network 13, the fusion network 12 has to adopt the size of encoded second input information to the dimension of said vector space, for example to 1x16 size. So, if encoded second input information has the dimension 1x12, the vector size of encoded second input information has to be increased to 1x16 in order to be able to add information included in encoded second input information as transformed information into latent space of hidden layer. In the present embodiment, the final size of hidden layer may be 9x16 which may be the input of the next hidden layer. In general, adding transformed information to the vector space of hidden layer is performed by concatenation, i.e. the vector space is increased by one or more rows or columns.

After concatenating, the further hidden layers are receiving information derived from first and second input information, i.e. from data-driven and knowledge-driven information. As such, the main neural network 13 provides predictions based on both, data-driven and knowledge-driven information.

It is worth mentioning that adding information of a knowledge-driven information source to a certain hidden layer is not limited to one hidden layer but said information fusion can also be performed in multiple layers.

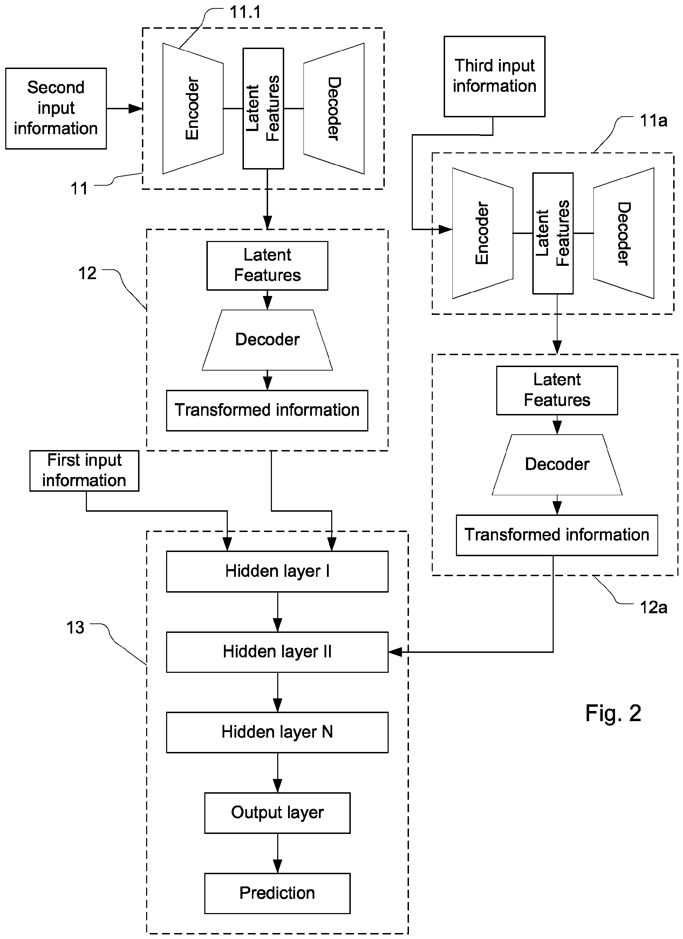

For example, as shown in Fig. 2, a first hidden layer may receive transformed information of a first fusion network 12 and a second hidden layer of the same main neural network 13 may receive transformed information of a second fusion network 12a. The second fusion network 12a is coupled with a second auto-encoder 11a. The second auto-encoder 11 receives third input information which may be also knowledge-based information provided by an expert data source. Said third input information can be information identical to second input information or can be different to second input information. Said third input information may be encoded by second auto-encoder 11a and transformed into transformed information by second fusion network 12a in order to be added to a further hidden layer of main neural network 13. Thereby, more than two different information can be fused in order to provide predictions.

The training of the system 10 is performed in multiple training steps:

In a first training step, the auto-encoder 11 is trained on second input information in order to learn compressed feature representations.

After training of auto-encoder 11, fusion network 12, specifically decoder 12.1 is trained together with main neural network 13.

The invention can be used, for example, in the following use cases:
A possible application area of the disclosed method and system is autonomous driving applications with the goal of developing an at least partially self-driving car. With a huge number of individual situations to master in the road traffic, driver assistance systems and autonomous driving include neural networks which are configured to assess certain driving situations and provide future predictions of said driving situation. A possible use case may be maneuver planning with the goal to predict complex traffic situations over a significant time horizon. For instance, changing the lane entails specific maneuvers of all other traffic participants close by. As a result, lane changing demands a cooperative behavior of all traffics participants, with humans being easily able to perform these maneuvers due to their long driving experiences and their ability to predict traffic situations.

In the area of autonomous driving it is advantageous to support and enhance the driving system with specific rules, world and/or expert knowledge and physical knowledge, which is typically stored in separate knowledge bases. Leveraging this knowledge to make separate knowledge-based predictions, the present disclosure can be used to incorporate knowledge-based predictions into a more sophisticated predictor for complex traffic situations.

Another, but related use case is the handling of pedestrians. Given a specific situation with a pedestrian walking along the road, expert knowledge in form of previously occurring situations or general world knowledge can be leveraged and integrated into a larger predictor network.

An additional use case may be controlled rule violation. For instance, the lane is partially blocked by an obstacle and the midline prohibits an overtaken action. In this case, the car needs to violate the rule of crossing the midline. Again, the respective forecasting predicts the approaching traffic by leveraging expert knowledge in the form of rules, world knowledge and physical knowledge.

Another use case is forecasting Customer Demand for Automotive Sales in the area of Supply Chain Management. Typically, historical time-series data comprising monthly shipment volumes, customer call-offs and number of working days per month, is used for training and testing the model. As output, the model predicts the Customer demand for the next 12 and 24 months. Inducing domain expert predictions about light-vehicle production figures, current market environment and situation at customer and supplier side, can potentially improve the forecast accuracy of such models significantly. Apart from this, expert predictions in the form of ARIMA models (ARIMA: autoregressive integrated moving average) or human expert predictions often need to be integrated as well. In this context, the present disclosure clearly simplifies the incorporation of those expert predictions in the main predictor system.

Fig. 5 shows a block diagram illustrating the method steps of a method for predicting time series of data based on a main neural network.

As a first step, first input information is received (S10). Said first input information is time-dependent numerical information. Said time-dependent numerical information may be provided by a sensor included or adapted to be included in a vehicle or may be provided by as an output of a computer system.

In addition, second input information is received (S11). Said second input information is knowledge-based information including one or more prediction information. Said prediction information is related to first input information, so second input information can be used for improving quality of predicted future time series values.

As a further step, second input information is processed based on an auto-encoder 11 (S12). The auto-encoder 11 is configured to encode second input information by extracting features from said second input information, thereby obtaining encoded second input information.

Said encoded second input information is provided to a fusion network 12. Said fusion network 12 provides transformed information which are obtained by transforming encoded second input information according to properties of the main neural network 13 (S13).

Finally, first input information and transformed information are provided to the main neural network 13. Said main neural network 13 fuses first input information and transformed information in order to provide a time series prediction based on first input information and transformed information (S14).

It should be noted that the description and drawings merely illustrate the principles of the proposed invention. Those skilled in the art will be able to implement various arrangements that, although not explicitly described or shown herein, embody the principles of the invention.

### List of reference numerals

- 10: system
- 11: auto-encoder
- 11a: auto encoder
- 11.1: encoder portion
- 12: fusion network
- 12a: fusion network
- 12.1: decoder
- 13: main neural network

## Claims

1. Computer-implemented method for predicting time series of data based on a main neural network (13), the method comprising the steps of:
- Receiving first input information, said first input information being time-dependent numerical information (S10);
- Receiving second input information, said second input information being rule- or knowledge-based information including one or more prediction information (S11);
- Processing second input information based on an auto-encoder (11), the auto-encoder (11) being configured to encode second input information by extracting features from said second input information, thereby obtaining encoded second input information (S12);
- Providing said encoded second input information to a fusion network (12), said fusion network (12) providing transformed information which is obtained by transforming encoded second input information according to properties of the main neural network (13) (S13).
- Providing first input information and transformed information to the main neural network (13), said main neural network (13) fusing first input information and transformed information in order to provide time series predictions based on first input information and transformed information (S14).

2. Method according to claim 1, wherein said auto-encoder (11) comprises an encoder portion (11.1) which maps second input information to a latent feature space comprising lower dimensionality than second input information.

3. Method according to claim 1 or 2, wherein fusion network (12) adapts the dimensionality of feature vector provided by the auto-encoder (11) to the dimensionality of a certain hidden layer of main neural network (13).

4. Method according to claim 3, wherein the step of adapting dimensionality comprises transforming at least one dimension of feature vectors provided by the auto-encoder (11) to at least one dimension of the vector space of said certain hidden layer such that at least one dimension of transformed information is equal to at least one dimension of vector space of said certain hidden layer.

5. Method according to anyone of preceding claims, wherein fusion network (12) projects encoded second input information provided by auto-encoder into latent subspace of main neural network (13).

6. Method according to anyone of preceding claims, wherein transformed information is concatenated with the features of a certain hidden layer of main neural network (12).

7. Method according to claim 6, wherein the step of concatenating transformed information with features of a certain hidden layer comprises increasing the dimensionality of vector space of a hidden layer.

8. Method according to claim 7, wherein the dimensionality is increased such that the vector space of the hidden layer in which transformed information are projected is the sum of dimensionality of features resulting from first input information and resulting from transformed information.

9. System for predicting time series of data, the system (10) comprising an auto-encoder (11), a fusion network (12) and a main neural network (13), the system (10) being configured to perform the steps of:
- Receiving first input information, said first input information being time-dependent numerical information (S10);
- Receiving second input information, said second input information being rule- or knowledge-based information including one or more prediction information (S11);
- Processing second input information based on the auto-encoder (11), the auto-encoder (11) being configured to encode second input information by extracting features from said second input information, thereby obtaining encoded second input information (S12);
- Providing said encoded second input information to the fusion network (12), said fusion network (12) providing transformed information which is obtained by transforming encoded second input information according to properties of the main neural network (13) (S13);
- Providing first input information and transformed information to the main neural network (13), said main neural network (13) being configured to fuse first input information and transformed information in order to provide a time series prediction based on first input information and transformed information (S14).

10. System according to claim 9, wherein the fusion network (12) is configured to adapt the dimensionality of feature vector provided by the auto-encoder (11) to the dimensionality of a certain hidden layer of main neural network (13).

11. System according to claim 10, wherein the fusion network (12) is configured to adapt the dimensionality of feature vectors such that at least one dimension of feature vectors provided by the auto-encoder (11) is transformed to at least one dimension of the vector space of said certain hidden layer such that at least one dimension of transformed information is equal to at least one dimension of vector space of said certain hidden layer.

12. System according to anyone of claims 9 to 11, wherein fusion network (12) is configured to project encoded second input information provided by auto-encoder (11) into latent subspace of main neural network (13).

13. System according to anyone of preceding claims 9 to 12, wherein transformed information is concatenated with the features of a certain hidden layer of main neural network (13).

14. System according to claim 13, wherein the step of concatenating transformed information with features of a certain hidden layer comprises increasing the dimensionality of vector space of a hidden layer.

15. System according to claim 14, wherein the dimensionality is increased such that the vector space of the hidden layer in which transformed information are projected is the sum of dimensionality of features resulting from first input information and resulting from transformed information.
